# EUROPÄISCHE PATENTSCHRIFT

(11) **EP 0 745 525 B1**
(45) Veröffentlichungstag und Bekanntmachung des Hinweises auf die Patenterteilung: **13.02.2002**
(21) Anmeldenummer: 96107531.4
(22) Anmeldetag: 11.05.1996
(51) Int. Cl.: B60T 17/02, F04C 29/00

(54) **Vakuumpumpe**
Vacuumpump
Pompe à vide

(30) Priorität: 31.05.1995 DE 19519841
(43) Veröffentlichungstag der Anmeldung: 04.12.1996
(73) Patentinhaber: LuK Automobiltechnik GmbH & Co. KG, 42499 Hückeswagen (DE)
(72) Erfinder: Otto, Dieter, 58256 Ennepetal (DE)
(74) Vertreter: Gleiss, Alf-Olav, Dr.jur. Dipl.-Ing.

(56) Entgegenhaltungen:
- EP-A- 0 199 984
- DE-A- 3 321 723
- FR-A- 2 373 694

## Beschreibung

Die Erfindung betrifft eine Vakuumpumpe insbesondere für Bremskraftverstärker-Anlagen von Kraftfahrzeugen gemäß Oberbegriff des Anspruchs 1.

Vakuumpumpen der hier angesprochenen Art weisen einen von der Brennkraftmaschine über eine Kupplung angetriebenen Rotor auf, der an seinem der Kupplung gegenüberliegenden Ende mit einem Flügel in Eingriff steht, der in einem Gehäuse in Rotation versetztbar ist. Es hat sich herausgestellt, dass der Rotor hohen mechanischen Belastungen ausgesetzt wird, weil vom Antrieb kommende starke Drehschwingungen über die Kupplung auf den Rotor übertragen werden. Die notwendigen Spiele in den Verbindungen Antriebswelle/Kupplung und Kupplung/Rotor verstärken sogar die Drehwinkelbeschleunigung der Antriebswelle noch. Dies führt häufig zu einem Bruch des Rotors oder erzwingt die Verwendung hochfester Materialien, deren Bearbeitung aufwendig und teuer ist.

Aus der FR 2 373 694 ist eine Vakuumpumpe mit einer Antriebswelle und einem Rotor bekannt. Die Antriebswelle ist über ein Federelement mit dem Rotor gekoppelt. Das Federelement weist einen S-förmigen Querschnitt auf. Das bekannte Federelement erfordert eine Vielzahl von Befestigungsmitteln, um ein Drehmoment sicher von der Antriebswelle auf den Rotor zu übertragen.

Die der Erfindung zugrundeliegende Aufgabe besteht darin, eine Vakuumpumpe gemäß dem Oberbegriff des neuen Patentanspruchs 1 zu schaffen, die einfach aufgebaut und kostengünstig herstellbar ist.

Diese Aufgabe wird bei einer Vakuumpumpe gemäß Oberbegriff des Anspruchs 1 mit Hilfe der in diesem Anspruch aufgeführten Merkmale gelöst. Dadurch, dass der Rotor der Vakuumpumpe ein elastisches Antriebselement aufweist, das mit der Kupplung zusammenwirkt, werden die beim Eingriff der Kupplung auftretenden Drehmomentspitzen aber auch die Drehschwingungen wirkungsvoll abgefedert, so dass ein Bruch des Rotors mit hoher Sicherheit vermieden wird. Dadurch dass der Rotor ein Antriebselement aufweist, das einen Flügelabschnitt mit zwei Flügelbereichen aufweist, die parallel in einem Abstand zueinander angeordnet sind, so dass der Flügel der Vakuumpumpe zwischen diesen Flügelbereichen angeordnet werden kann, ist sichergestellt, dass ein auf das Antriebselement wirkendes Drehmoment sicher auf den Flügel übertragen wird.

Bevorzugt wird eine Ausführungform der Vakuumpumpe, bei der der Rotor ein langestrecktes Antriebselement aufweist, das von dem Eingriffsbereich der Kupplung bis zu dem Flügel reicht. Das Drehmoment der Kupplung wird also durch das Antriebselement bis zu den Flügeln weitergeleitet, wobei Belastungsspitzen, die auch durch Drehschwingungen entstehen, wirkungsvoll abgefedert werden.

Bevorzugt wird weiterhin eine Ausführungsform der Vakuumpumpe, deren Antriebselement einstückig ausgebildet ist, weil hier die Herstellungskosten relativ gering sind und Funktionsstörungen aufgrund des einfachen Aufbaus auf ein Minimum reduziert werden.

Weiterhin wird eine Ausführungsform der Vakuumpumpe bevorzugt, bei der das Antriebselement einen Kupplungsabschnitt aufweist, der über seine Länge eine variable Breite aufweist. Durch diese Ausgestaltung ist es möglich, die Federungseigenschaften des Antriebselements auf die Betriebsbedingungen verschiedener Vakuumpumpen abzustimmen.

Schließlich wird eine Ausführungsform der Vakuumpumpe bevorzugt, bei der der Rotor zwei gleich ausgebildete Halbkörper aufweist, in deren Trennbereich das Antriebselement angeordnet ist. Die Antriebskräfte werden unmittelbar von den Halbkörpern aufgenommen und in den Rotor eingeleitet, so dass sich ein sehr stabiler Aufbau ergibt: Der Rotor stützt das Antriebselement sicher im Inneren der Vakuumpumpe ab. Dabei ist die Herstellung des Rotors sehr einfach und damit kostengünstig realisierbar.

Weitere Ausgestaltungen ergeben sich aus den übrigen Unteransprüchen.

Die Erfindung wird im folgenden anhand der Zeichnung näher erläutert. Es zeigen:
- Figur 1: eine stark schematisierte Seitenansicht einer Vakuumpumpe im Teilschnitt;
- Figur 2: einen Längsschnitt durch den Rotor einer Vakuumpumpe;
- Figur 3: eine Draufsicht auf ein Antriebselement einer Vakuumpumpe gemäß Figur 1:
- Figuren 4 bis 7: verschiedene Ausgestaltungen des Antriebselements.

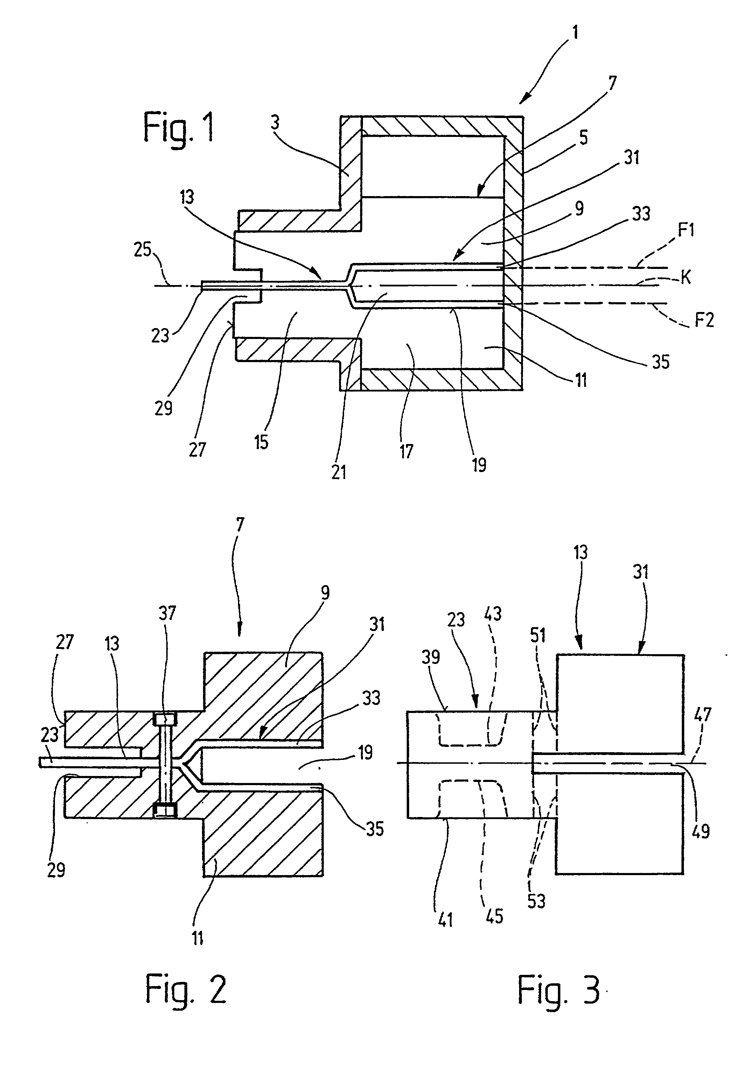

Die in Figur 1 dargestellte Vakuumpumpe 1 weist einen Flansch 3 und ein daran befestigtes Gehäuse 5 auf. Im Inneren der Vakuumpumpe 1 befindet sich ein Rotor 7, der mehrteilig ausgebildet ist und hier zwei Halbkörper 9 und 11 aufweist. Die Außenfläche des Rotors 7 ist zylindrisch ausgebildet. Die Halbkörper 9 und 11 sind identisch. Sie schließen in ihrem Trennbereich, der in der Symmetrieebene des Rotors 7 liegt, ein Antriebselement 13 ein.

Ein erster Abschnitt 15 des Rotors 7 liegt innerhalb des Flansches 3 und wird dort auf geeignete Weise gelagert. Ein zweiter Abschnitt 17 des Rotors 7 weist einen größeren Außendurchmesser auf und ist im Inneren des Gehäuses 5 angeordnet, dessen Innendurchmesser größer ist als der des zweiten Abschnitts 17.

Der zweite Abschnitt 17 ist mit einem durchgehenden, im Bereich der Trennebene der Halbkörper 9 und 11 angeordneten Schlitz 19 versehen, der einen Flügel 21 aufnimmt, dessen Länge größer ist als der Durchmesser des zweiten Abschnitts 17. Der Flügel 21 ist innerhalb des Schlitzes 19 in Durchmesserrichtung verlagerbar. Er wird von dem Rotor 7, dessen Mittelpunkt außerhalb des Mittelpunkts des Gehäuses 5 angeordnet ist, so geführt, daß der im wesentlichen elliptisch ausgebildete Innenraum des Gehäuses 5 in zwei Abschnitte unterteilt wird, die der Erzeugung eines Vakuums dienen. Vakuumpumpen der hier angesprochenen Art sind bekannt, so daß auf deren Funktion und Aufbau nicht näher eingegangen wird.

Das Antriebselement 13 weist einen im Bereich des Flansches 3 angeordneten Kupplungsabschnitt 23 auf, der in einer Ebene K angeordnet ist, in der auch die Drehachse 25 des Rotors 7 verläuft.

Der Kupplungsabschnitt 23 steht über die kupplungsseitige Stirnfläche 27 des Rotors 7 hinaus. Die Halbkörper 9 und 11 sind so ausgebildet, daß nahe der Stirnfläche 27 eine Schlitzausnehmung 29 gebildet wird, die in Durchmesserrichtung des Rotors 7, hier in Richtung der Ebene K beziehungsweise der Trennebene der Halbkörper 9 und 11, verläuft. Die von der Stirnfläche 27 gemessene Tiefe der Schlitzausnehmung 29 kann variiert werden; damit wird auch die Länge des nicht eingespannten, freien Kupplungsabschnitts 23 verändert. Auf diese Weise können die Federeigenschaften des Antriebselements 13 an verschiedene Typen von Vakuumpumpen 1 angepaßt werden, worauf unten noch näher eingegangen wird.

Das Antriebselement 13 weist einen Flügelabschnitt 31 auf, der zwei Flügelbereiche 33 und 35 umfaßt. Die Flügelbereiche sind in zueinander parallelen in einem Abstand zueinander angeordneten Ebenen F1 und F3 angeordnet, die parallel zur Ebene K des Kupplungsabschnitts 23 verlaufen. Vorzugsweise bildet die Ebene K die Symmetrieebene beziehungsweise Mittelebene zwischen den Ebenen F1 und F2.

Aus der Darstellung gemäß Figur 1 ist ersichtlich, daß das Antriebselement 13 einstückig ausgebildet ist und sich über die gesamte Länge des Rotors 7 erstreckt. Insbesondere wird deutlich, daß die Flügelbereiche 33 und 35 zumindest bereichsweise wenigstens eine Seitenfläche des Schlitzes 19 bilden. Hier sind die Flügelbereiche 33 und 35 auf den einander gegenüberliegenden Seitenflächen des Schlitzes 19 angeordnet; sie liegen an den Seitenflächen des Flügels 21 an, so daß ein auf den Kupplungsabschnitt 23 ausgeübtes Drehmoment unmittelbar an den Flügel 21 weitergeleitet wird.

Eine mit der Vakuumpumpe 1 zusammenwirkende Kupplung greift an dem freistehenden Ende des Kupplungsabschnitts 23 an und versetzt damit den Rotor 7 in Rotation, wodurch sich auch der Flügel 21 im Inneren des Gehäuses 5 dreht und auf bekannte Weise ein Unterdruck erzeugt wird.

Der Aufbau des Rotors 7 soll anhand der Längsschnittdarstellung in Figur 2 genauer erläutert werden. Gleiche Teile sind mit gleichen Bezugsziffern versehen, so daß insofern auf die Beschreibung zu Figur 1 verwiesen wird.

Zwischen den beiden gleichen Halbkörpern 9 und 11 des Rotors 7 befindet sich also das Antriebselement 13, dessen Kupplungsabschnitt 23 über die Stirnfläche 27 des Rotors 7 hinwegragt und in einer Schlitzausnehmung 29 angeordnet ist. In den Kupplungsabschnitt 23 eingeleitete Drehmomente können im freistehenden Bereich des Kupplungsabschnitts 23 zu einer Verdrillung führen, da das Antriebselement 13 aus einem elastisch nachgiebigen Material besteht. In den Kupplungsabschnitt 23 eingeleitete Drehmomente werden auf den Rotor 7 übertragen, da das Antriebselement 13 fest zwischen den Halbkörpern 9 und 11 eingespannt ist, die beispielsweise über eine das Antriebselement 13 durchdringende Schraube 37 miteinander verbunden sind.

Aus Figur 2 wird noch einmal deutlich, daß das Antriebselement 13 einstückig ausgebildet ist und sich über die gesamte Länge des Rotors 7 erstreckt und insbesondere auch an den Seitenflächen des Schlitzes angeordnet ist. Dazu ist der Flügelabschnitt 31 zweigeteilt in zwei Flügelbereiche 33 und 35.

Der Rotor 7 beziehungsweise dessen Halbkörper 9 können aus Kunststoff, aus Metall oder aus einem Sintermaterial bestehen. Wesentlich ist, daß die von einer hier nicht dargestellten Kupplung auf den Rotor 7 ausgeübten Antriebskräfte von dem Antriebselement 13, beziehungsweise von dessen Kupplungsabschnitt 23, aufgenommen und an den Flügel 21 weitergeleitet werden, an dem die Flügelbereiche 33 und 35 des Flügelabschnitts 31 anliegen. Die Halbkörper 9 und 11 des Rotors 7 dienen der Abstützung und Lagerung des Antriebselements 13, das aber wesentliche Anteile der Antriebskräfte abfängt, so daß die Festigkeitsanforderungen an den Rotor 7 deutlich reduziert werden können. Desweiteren übernehmen die Halbkörper 9 und 11 Dichtfunktionen innerhalb der Pumpe, durch die erst eine Pumpfunktion ermöglicht wird, die aber keine besondere Festigkeitsanforderungen an die Halbkörper stellen. Somit können hier preiswerte Bauteile (Materialauswahl, Fertigungsverfahren) eingesetzt werden.

Die Ausgestaltung des Antriebselements 13 ergibt sich deutlich aus der in Figur 3 gezeigten Dräufsicht, die den Kupplungsabschnitt 23 und den Flügelabschnitt 31 wiedergibt. Der Kupplungsabschnitt 23 ist im wesentlichen rechteckförmig ausgebildet. Gestrichelt ist dargestellt, daß die im wesentlichen parallel zueinander verlaufenden Längskanten 39 und 41 -über die Länge des Kupplungsabschnitts gesehen- einen variablen Abstand zueinander aufweisen können, daß also die Breite des Kupplungsabschnitts 23 unterschiedlich sein kann. Gestrichelt ist eingezeichnet, daß der Kupplungsabschnitt 23 in der Mitte konkav ausgebildete Längskantenbereiche 43 und 45 aufweisen kann, so daß also die Festigkeit des Kupplungsabschnitts 23 über dessen Länge verschieden ist.

Durch eine derartige Ausgestaltung des Kupplungsabschnitts kann dessen Elastizität auf gewünschte Betriebsverhältnisse der Vakuumpumpe 1 abgestimmt werden. Drehmomentspitzen und Drehschwingungen die im Betrieb der Pumpe Druckpulsationen bewirken, können also durch die gezielte Beeinflussung der Elastizität des Antriebselements 13 besonders gut abgebaut werden.

Die federelastischen Eigenschaften des Antriebselements 13 können überdies nicht nur die variable Breite des Kupplungsabschnitts 23 sondern auch durch die Tiefe der Schlitzausnehmung 29 variiert werden. Je länger der freistehende Bereich des Kupplungsabschnitts 23 ist, um so nachgiebiger ist dieser Bereich des Antriebselements.

Zur Beeinflussung der Federelastizität des Antriebselements 13 ist es auch möglich, den Kupplungsabschnitt 23 wellenförmig auszubilden, zumindest in dem freien überstehenden Bereich, der über die Stirnfläche 27 hinausragt und/oder in der Schlitzausnehmung 29 angeordnet ist. Denkbar ist es darüber hinaus, den Kupplungsabschnitt 23 mit quer zur Mittelachse 47 oder längs dazu verlaufenden Einschnitten zu versehen, damit Antriebsmomentsbeziehungsweise Drehschwingungen weicher abgefangen werden.

Die Darstellung in Figur 3 läßt erkennen, daß der Flügelabschnitt 31 zwei symmetrisch ausgebildete Flügelbereiche 33 und 35 aufweist, die symmetrisch zur Mittelachse 47 angeordnet sind, die mit der Drehachse 25 des Rotors 7 zusammenfällt. Die beiden Flügelbereiche 33 und 35 sind durch einen langgestreckten Schlitz 49 voneinander getrennt, der sich über die gesamte Länge der Flügelbereiche 33 und 35 erstreckt und etwas in den Kupplungsabschnitt 23 hineinragt. Dadurch ist es möglich, wie durch die gestrichelten Biegelinien 51 und 53 angedeutet, die Flügelbereiche 33 und 35 aus der Ebene K des Kupplungsabschnitts 23 herauszuschwenken. Beispielsweise ist der Flügelbereich 33 gegenüber dem Kupplungsabschnitt 23 nach unten gebogen, während der Flügelbereich 35 gegenüber dem Kupplungsabschnitt 23 nach oben gebogen ist. Beide Flügelbereiche 33 und 35 verlaufen dann in einem Abstand parallel zueinander und sind in den Ebenen F1 und F2 angeordnet, in deren Mitte die Ebene K des Kupplungsabschnitts 23 verläuft.

Das Antriebselement 13 ist aus einem elastischem Material hergestellt, vorzugsweise aus Metall. Es läßt sich durch einfache Weise in einem Stanzvorgang produzieren, so daß die Herstellungskosten minimal sind.

Entsprechend dem größeren Außendurchmesser des zweiten Abschnitts 17 des Rotors 7 ist die Gesamtbreite des Flügelabschnitts 31 größer als die Breite des Kupplungsabschnitts 23. Länge und Breite der verschiedenen Bereiche des Antriebselements 13 werden auf die Abmessungen des Rotors 7 abgestimmt.

Aufgrund der Tatsache, daß das Antriebselement 13 Drehmomente von der Kupplung bis zum Flügel 21 übertragen kann, können die Halbkörper 9 und 11 praktisch auch als Hilfskörper bezeichnet werden, die den Rotor 7 einerseits im Flansch 3 der Vakuumpumpe 1 abstützen und andererseits dazu dienen, den Flügel 21 im Gehäuse 5 zu halten und in Rotation zu versetzen. Dabei müssen die Seitenflächen des Schlitzes 19 so an den seitlichen Wänden des Flügels 21 anliegen, daß hier eine radiale Abdichtung gewährleistet ist und die beiden im Inneren des Gehäuses 5 gebildeten Kammern voneinander getrennt sind.

Dadurch, daß das Antriebselement 13 einerseits mit einer Kupplung im Eingriff steht und andererseits an dem Flügel 21 anliegt, können Drehmomente sicher übertragen werden. Die Draufsicht in Figur 3 zeigt auch, daß die mit den Biegelinien 51 und 53 versehenen Bereiche ihrerseits als Federelemente dienen und die Antriebskräfte aber auch die Druckstöße elastisch nachgiebig abfangen. Es ist also auch möglich die Breite der mit den Biegelinien 51 und 53 versehenen Bereiche zu variieren, um die Federeigenschaften des Antriebselements 13 an bestimmte Betriebsbedingungen der Vakuumpumpe 1 anzupassen.

Das Antriebselement 13 greift in ein Langloch einer hier nicht dargestellten Kupplung ein, die vorzugsweise in einem Sinterverfahren hergestellt wird. Für eine ausreichende Werkzeugfestigkeit bei der Herstellung der Kupplung muß das Langloch mindestens eine Breite von ca. 6 mm aufweisen. Da das Antriebselement 13 vorzugsweise aus einem Blechteil gestanzt wird, ist die Dicke im Kupplungsabschnitt 23, der in das Langloch der Kupplung eingreift, geringer als 6 mm.

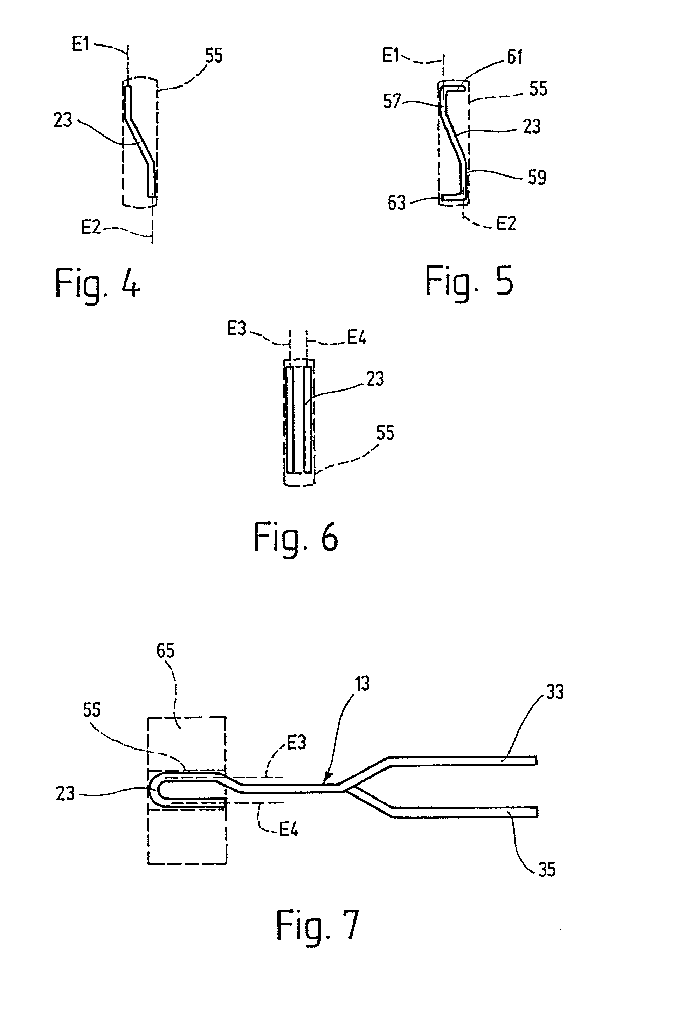

Um eine Drehmomentübertragung zwischen Kupplung und Kupplungsabschnitt 23 sicherzustellen, kann der Kupplungsabschnitt 23, wie anhand der Figuren 4 bis 7 dargestellt, eine spezielle Ausgestaltung erfahren.

Gemäß Figur 4 kann der Kupplungsabschnitt 23 so verformt werden, daß seine Randbereiche in verschiedenen Ebenen E1 und F2 angeordnet sind. Der Abstand der beiden Ebenen E2 und E3 ist vorzugsweise etwas größer als die Breite des durch eine gestrichelte Linie angedeuteten Langlochs der Kupplung. Der Kupplungsabschnitt 23 kann beim Einführen in das Langloch 55 etwas zusammen gedrückt werden und hält dann aufgrund der Federeigenschaften des Materials des Antriebselements 13 spielfrei in der Kupplung.

Das in Figur 5 dargestellte Ausführungsbeispiel des Kupplungsabschnitts 23 entspricht dem in Figur 4 dargestellten, so daß auf die Beschreibung zu Figur 4 verwiesen werden kann. Bei dem Ausführungsbeispiel in Figur 5 sind die Randbereiche 57 und 59 des Kupplungsabschnitts 23, die in den Ebenen E1 und E2 angeordnet sind, rechtwinklig umgebogen, wobei die Länge der umgebogenen Abschnitte 61 und 63 im wesentlichen der Breite des Langlochs 55 entsprechen. Auch durch diese Ausgestaltung wird der Kupplungsabschnitt 23, dessen Materialstärke wesentlich geringer ist als die Breite des Langlochs 55 der Kupplung, spielfrei in der Kupplung gehalten.

Ein weiteres Ausführungsbeispiel des Kupplungsabschnitts 23 ist anhand der Figuren 6 und 7 dargestellt. Der Kupplungsabschnitt ist hier in sich U-förmig umgebogen, wobei die Knicklinie der Umbiegung senkrecht zu der in Figur 3 dargestellten Mittelachse 47 verläuft. Die beiden Schenkelabschnitte des U-förmig umgebogenen Bereichs des Kupplungsabschnitts 23 liegen den Ebenen E3 und E4, deren Abstand wiederum so gewählt ist, daß der U-förmig umgebogene Bereich des Kupplungsabschnitts 23 spielfrei, vorzugsweise unter einer gewissen Vorspannung im Langloch 55 der Kupplung angeordnet ist.

Figur 7 zeigt den umgebogenen Bereich des Kupplungsabschnitts 23 in Seitenansicht. Das Antriebselement 13 ist hier in einer Position dargestellt, die der in Figur 2 wiedergegebenen Stellung entspricht. Es sind also hier die Flügelbereiche 33 und 35 des Antriebselements 13 deutlich erkennbar. In Figur 7 sind die Kupplung 65 und deren Langloch 55 gestrichelt angedeutet.

Die Ausgestaltungen des Kupplungsabschnitts 23 sind hier nur beispielhaft gewählt. Es ist auch denkbar, die Randbereiche des Kupplungsabschnitts 23 mit Flügelabschnitten zu versehen, die nach innen in Richtung zur Mittelachse 47 umgebogen werden, so daß hier Materialbereiche vorhanden sind, die, wie anhand der Figuren 4 bis 7 erläutert, in Ebenen liegen, die einem Abstand zueinander angeordnet sind, der der Breite des Langlochs 55 entspricht.

Auf jeden Fall ist sichergestellt, daß das Antriebselement 13 aus einem relativ dünnen Blech herstellbar ist und dennoch einen sicheren Halt in einem Langloch 55 einer Kupplung findet, dessen Breite aufgrund eines speziellen Herstellungsverfahrens, nämlich wegen des Sinterverfahrens, ein gewisses Mindestmaß nicht unterschreiten kann. Dennoch wird auf jeden Fall das Antriebselement 13 spielfrei mit der Kupplung gekoppelt, so daß sich die oben beschriebenen Vorteile ergeben.

## Patentansprüche

1. Vakuumpumpe (1) insbesondere für Bremskraftverstärker-Anlagen in Kraftfahrzeugen, mit einem über eine Kupplung von der Brennkraftmaschine des Kraftfahrzeugs antreibbarem Rotor (7), über den ein Flügel (21) in einem Gehäuse (5) in Rotation versetzbar ist, wobei der Rotor (7) ein mit der Kupplung zusammenwirkbares elastisches Antriebselement (13) aufweist, **dadurch gekennzeichnet, dass** das Antriebselement (13) einen Flügelabschnitt (31) mit zwei Flügelbereichen (33,35) aufweist, die parallel in einem Abstand zueinander angeordnet sind, so dass der Flügel (21) der Vakuumpumpe zwischen diesen Flügelbereichen (33,35) angeordnet werden kann.

2. Vakuumpumpe nach Anspruch 1, **dadurch gekennzeichnet, dass** das Antriebselement (13) in Längsrichtung des Rotors (7) verläuft.

3. Vakuumpumpe nach Anspruch 1 oder 2, **dadurch gekennzeichnet, dass** das Antriebselement (13) sich von dem Bereich des Rotors, in dem die Kupplung eingreift, bis zu dem Flügel (21) erstreckt.

4. Vakuumpumpe nach einem der vorhergehenden Ansprüche, **dadurch gekennzeichnet, dass** das Antriebselement (13) ein über die Kupplung aufgebrachtes Antriebsmoment unmittelbar auf den Flügel (21) überträgt.

5. Vakuumpumpe nach einem der vorhergehenden Ansprüche, **dadurch gekennzeichnet, dass** das Antriebselement (13) einstückig ausgebildet ist.

6. Vakuumpumpe nach einem der vorhergehenden Ansprüche, **dadurch gekennzeichnet, dass** das Antriebselement (13) als Stanzteil ausgebildet ist und vorzugsweise aus Metallblech besteht.

7. Vakuumpumpe nach einem der vorhergehenden Ansprüche, **dadurch gekennzeichnet, dass** das Antriebselement (13) einen Kupplungsabschnitt (23) aufweist.

8. Vakuumpumpe nach Anspruch 7, **dadurch gekennzeichnet, dass** der Kupplungsabschnitt (23) -in Draufsicht gesehen- im wesentlichen rechteckig ausgebildet ist.

9. Vakuumpumpe nach Anspruch 7 oder 8, **dadurch gekennzeichnet, dass** der Kupplungsabschnitt (23) über seine Länge eine variable Breite aufweist.

10. Vakuumpumpe nach einem der Ansprüche 7 bis 9, **dadurch gekennzeichnet, dass** die Längskanten (39,41) des Kupplungsabschnitts (23) konkav eingezogen sind.

11. Vakuumpumpe nach einem der vorhergehenden Ansprüche, **dadurch gekennzeichnet, dass** die Flügelbereiche (33,35) symmetrisch zu einem Schlitz (49) ausgebildet sind, der die Flügelbereiche (33,35) voneinander trennt.

12. Vakuumpumpe nach einem der Ansprüche 7 bis 10, **dadurch gekennzeichnet, dass** die Flügelbereiche (33,35) gegenüber dem Kupplungsabschnitt (23) verlagert sind.

13. Vakuumpumpe nach einem der Ansprüche 7 bis 10 oder 12, **dadurch gekennzeichnet, dass** der Kupplungsabschnitt (23) in einer Ebene (K) angeordnet ist, die parallel zu den Ebenen (F1,F2) der Flügelbereiche (33,35) angeordnet ist.

14. Vakuumpumpe nach einem der Ansprüche 7 bis 10, 12 oder 13, **dadurch gekennzeichnet, dass** die Ebene (K) des Kupplungsabschnitts (23) etwa in der Mitte zwischen den Ebenen (F1,F2) der Flügelbereiche (33,35) angeordnet ist.

15. Vakuumpumpe nach einem der Ansprüche 7 bis 10 oder 12 bis 14, **dadurch gekennzeichnet, dass** der Flügelabschnitt (31) breiter ist als der Kupplungsabschnitt (23).

16. Vakuumpumpe nach einem der Ansprüche 7 bis 10 oder 12 bis 15, **dadurch gekennzeichnet, dass** der Kupplungsabschnitt (23) symmetrisch zu einer Mittelachse (47) des Antriebelements (13) ausgebildet ist.

17. Vakuumpumpe nach einem der Ansprüche 7 bis 10 oder 12 bis 16, **dadurch gekennzeichnet, dass** die Verlängerung der Symmetrieachse des Kupplungsabschnitts (23) mit dem Schlitz (49) zwischen den Flügelbereichen (33,35) zusammenfällt.

18. Vakuumpumpe nach einem der vorhergehenden Ansprüche, **dadurch gekennzeichnet, dass** der Rotor (7) mehrteilig, vorzugsweise zweiteilig ausgebildet ist.

19. Vakuumpumpe nach einem der vorhergehenden Ansprüche, **dadurch gekennzeichnet, dass** der Rotor (7) zwei -vorzugsweise gleich ausgebildete- Halbkörper (9,11) aufweist, in deren Trennbereich das Antriebselement (13) angeordnet ist.

20. Vakuumpumpe nach einem der Ansprüche 7 bis 10 oder 12 bis 17, **dadurch gekennzeichnet, dass** der Rotor (7) im Bereich des Kupplungsabschnitts (23) des Antriebselements (13) eine Schlitzausnehmung (29) aufweist.

21. Vakuumpumpe nach einem der vorhergehenden Ansprüche, **dadurch gekennzeichnet, dass** der Rotor (7) im Bereich des Flügelabschnitts (31) des Antriebselements (13) einen den Flügel (21) aufnehmenden Schlitz (19) aufweist.

22. Vakuumpumpe nach einem der Ansprüche 11, 17 oder 20, **dadurch gekennzeichnet, dass** wenigstens eine Seitenfläche des Schlitzes (19) zumindest bereichsweise von dem Flügelabschnitt (31) und/oder den Flügelbereichen (33, 35) des Antriebselements (13) gebildet wird.

23. Vakuumpumpe nach Anspruch 19, **dadurch gekennzeichnet, dass** die Halbkörper (9,11) des Rotors (7) fest miteinander verbunden sind, wobei das Antriebselement (13) von beiden Halbkörpern (9,11) festgehalten wird.

24. Vakuumpumpe nach einem der vorhergehenden Ansprüche, **dadurch gekennzeichnet, dass** der Rotor (7) aus Kunststoff, Metall oder Sintermaterial besteht.

## Claims

1. Vacuum pump (1) especially for servo-brake units in automotive vehicles, having a rotor (7) which is actuatable via a coupling of the internal combustion engine of the automotive vehicle, via which rotor a blade (21) can be set in rotation in a housing (5), the rotor (7) having an elastic actuation element (13) which is cooperable with the coupling, **characterised in that** the actuation element (13) has a blade portion (31) with two blade regions (33, 35) which are disposed parallel to each other at a spacing, so that the blade (21) of the vacuum pump can be disposed between these blade regions (33, 35).

2. Vacuum pump according to claim 1, **characterised in that** the actuation element (13) extends in the longitudinal direction of the rotor (7).

3. Vacuum pump according to claim 1 or 2, **characterised in that** the actuation element (13) extends from the region of the rotor, in which region the coupling engages, up to the blade (21).

4. Vacuum pump according to one of the preceding claims, **characterised in that** the actuation element (13) transmits a driving torque, which is applied via the coupling, directly on to the blade (21).

5. Vacuum pump according to one of the preceding claims, **characterised in that** the actuation element (13) is configured as one-piece.

6. Vacuum pump according to one of the preceding claims, **characterised in that** the actuation element (13) is configured as a stamped part and is preferably made of sheet metal.

7. Vacuum pump according to one of the preceding claims, **characterised in that** the actuation element (13) has a coupling portion (23).

8. Vacuum pump according to claim 7, **characterised in that** the coupling portion (23) - observed in plan view - is configured substantially rectangularly.

9. Vacuum pump according to claim 7 or 8, **characterised in that** the coupling portion (23) has a variable width across its length.

10. Vacuum pump according to one of the claims 7 to 9, **characterised in that** the longitudinal edges (39, 41) of the coupling portion (23) are retracted concavely.

11. Vacuum pump according to one of the preceding claims, **characterised in that** the blade regions (33, 35) are configured symmetrically relative to a slot (49) which separates the blade regions (33, 35) from each other.

12. Vacuum pump according to one of the claims 7 to 10, **characterised in that** the blade regions (33, 35) are displaced relative to the coupling portion (23).

13. Vacuum pump according to one of the claims 7 to 10 or 12, **characterised in that** the coupling portion (23) is disposed in a plane (K) which is disposed parallel to the planes (F1, F2) of the blade regions (33, 35).

14. Vacuum pump according to one of the claims 7 to 10, 12 or 13, **characterised in that** the plane (K) of the coupling portion (23) is disposed approximately in the centre between the planes (F1, F2) of the blade regions (33, 35).

15. Vacuum pump according to one of the claims 7 to 10 or 12 to 14, **characterised in that** the blade portion (31) is wider than the coupling portion (23).

16. Vacuum pump according to one of the claims 7 to 10 or 12 to 15, **characterised in that** the coupling portion (23) is configured symmetrically relative to a central axis (47) of the actuation element (13).

17. Vacuum pump according to one of the claims 7 to 10 or 12 to 16, **characterised in that** the extension of the axis of symmetry of the coupling portion (23) coincides with the slot (49) between the blade regions (33, 35).

18. Vacuum pump according to one of the preceding claims, **characterised in that** the rotor (7) is configured in several parts, preferably in two parts.

19. Vacuum pump according to one of the preceding claims, **characterised in that** the rotor (7) has two semi-bodies (9, 11) - preferably configured in an identical manner - the actuation element (13) being disposed in the separation region of said semi-bodies.

20. Vacuum pump according to one of the claims 7 to 10 or 12 to 17, **characterised in that** the rotor (7) has a slot recess (29) in the region of the coupling portion (23) of the actuation element (13).

21. Vacuum pump according to one of the preceding claims, **characterised in that** the rotor (7) has a slot (19), which receives the blade (21), in the region of the blade portion (31) of the actuation element (13).

22. Vacuum pump according to one of the claims 11, 17 or 20, **characterised in that** at least one lateral face of the slot (19) is formed at least in regions from the blade portion (31) and/or from the blade regions (33, 35) of the actuation element (13).

23. Vacuum pump according to claim 19, **characterised in that** the semi-bodies (9, 11) of the rotor (7) are connected to each other in a fixed manner, the actuation element (13) being retained by both semi-bodies (9, 11).

24. Vacuum pump according to one of the preceding claims, **characterised in that** the rotor (7) is made of plastic material, metal or sintered material.

## Revendications

1. Pompe à vide (1) notamment pour une installation d'amplificateur de force de freinage équipant les véhicules automobiles, comprenant un rotor (7) entraîné par l'intermédiaire d'un embrayage à partir du moteur à combustion interne du véhicule, qui met en rotation une ailette (21) dans un boîtier (5), le rotor (7) ayant un élément d'entraînement (13) élastique coopérant avec l'embrayage,
**caractérisée en ce que**
l'élément d'entraînement (13) comporte un segment d'ailette (31) avec deux zones d'ailette (33, 35) parallèles et à distance l'une de l'autre de façon que l'ailette (21) de la pompe à vide se trouve entre les zones d'ailette (33, 35).

2. Pompe à vide selon la revendication 1,
**caractérisée en ce que**
l'élément d'entraînement (13) est dirigé dans la direction longitudinale du rotor (7).

3. Pompe à vide selon l'une quelconque des revendications 1 ou 2,
**caractérisée en ce que**
l'élément d'entraînement (13) s'étend entre la zone du rotor dans laquelle pénètre l'embrayage jusqu'au niveau de l'ailette (21).

4. Pompe à vide selon l'une quelconque des revendications précédentes,
**caractérisée en ce que**
l'élément d'entraînement (13) transmet un couple appliqué par l'embrayage, directement à l'ailette (21).

5. Pompe à vide selon l'une quelconque des revendications précédentes,
**caractérisée en ce que**
l'élément d'entraînement (13) est réalisé en une seule pièce.

6. Pompe à vide selon l'une quelconque des revendications précédentes,
**caractérisée en ce que**
l'élément d'entraînement (13) est une pièce matricée, de préférence en tôle métallique.

7. Pompe à vide selon l'une quelconque des revendications précédentes,
**caractérisée en ce que**
l'élément d'entraînement (13) comporte un segment d'accouplement (23).

8. Pompe à vide selon la revendication 7,
**caractérisée en ce que**
le segment d'accouplement (23) présente une forme essentiellement rectangulaire en vue de dessus.

9. Pompe à vide selon l'une quelconque des revendications 7 ou 8,
**caractérisée en ce que**
le segment d'accouplement (23) a une largeur variable dans le sens de sa longueur.

10. Pompe à vide selon l'une quelconque des revendications 7 à 9,
**caractérisée en ce que**
les arêtes longitudinales (39, 41) du segment d'accouplement (23) sont de forme concave.

11. Pompe à vide selon l'une quelconque des revendications précédentes,
**caractérisée en ce que**
les plages d'ailette (33, 35) sont symétriques par rapport à une fente (49) qui sépare l'une de l'autre les zones d'ailette (33, 35).

12. Pompe à vide selon l'une quelconque des revendications 7 à 10,
**caractérisée en ce que**
les zones d'ailette (33, 35) sont décalées par rapport au segment d'accouplement (23).

13. Pompe à vide selon l'une quelconque des revendications 7 à 10 ou 12,
**caractérisée en ce que**
le segment d'accouplement (23) est situé dans un plan (K) parallèle aux plans (F1, F2) des zones d'ailette (33, 35).

14. Pompe à vide selon l'une quelconque des revendications 7 à 10, 12 ou 13,
**caractérisée en ce que**
le plan (K) du segment d'accouplement (23) se trouve sensiblement au milieu entre les plans (F1, F2) des zones d'ailette (33, 35).

15. Pompe à vide selon l'une quelconque des revendications 7 à 10 ou 12 à 14,
**caractérisée en ce que**
le segment d'ailette (31) est plus large que le segment d'accouplement (23).

16. Pompe à vide selon l'une quelconque des revendications 7 à 10 ou 12 à 15,
**caractérisée en ce que**
le segment d'accouplement (23) est symétrique par rapport à l'axe (47) de l'élément d'entraînement (13).

17. Pompe à vide selon l'une quelconque des revendications 7 à 10 ou 12 à 16,
**caractérisée en ce que**
le prolongement de l'axe de symétrie du segment d'accouplement (23) coïncide avec la fente (49) entre les zones d'ailette (33, 35).

18. Pompe à vide selon l'une quelconque des revendications précédentes,
**caractérisée en ce que**
le rotor (7) est en plusieurs parties, notamment en deux parties.

19. Pompe à vide selon l'une quelconque des revendications précédentes,
**caractérisée en ce que**
le rotor (7) comprend deux demi-corps (9, 11), de préférence identiques, et l'élément d'entraînement (13) se trouve dans leur plan de jonction.

20. Pompe à vide selon l'une quelconque des revendications 7 à 10 ou 12 à 17,
**caractérisée en ce que**
le rotor (7) présente une cavité en forme de fente (29) dans la zone du segment d'accouplement (23) de l'élément d'entraînement (13).

21. Pompe à vide selon l'une quelconque des revendications précédentes,
**caractérisée en ce que**
le rotor (7) comporte une fente (19) au niveau du segment d'ailette (31) de l'élément d'entraînement (13) pour recevoir l'ailette (21).

22. Pompe à vide selon l'une quelconque des revendications 11, 17 ou 20,
**caractérisée en ce qu'**
au moins une surface latérale de la fente (19) est formée au moins par zone par le segment d'ailette (31) et/ou les zones d'ailette (33, 35) de l'élément d'entraînement (13).

23. Pompe à vide selon la revendication 19,
**caractérisée en ce que**
les demi-corps (9, 11) du rotor (7) sont reliés solidairement et l'élément d'entraînement (13) est maintenu par les deux demi-corps (9, 11).

24. Pompe à vide selon l'une quelconque des revendications précédentes,
**caractérisée en ce que**
le rotor (7) est en matière plastique, en métal ou en matière frittée.
